Europäisches Patentamt

European Patent Office

Office européen des brevets

(11) Publication number: **0 144 168**
**A2**

## (12) EUROPEAN PATENT APPLICATION

(21) Application number: 84307688.6

(22) Date of filing: 07.11.84

(51) Int. Cl.⁴: **A 47 G 23/04**
A 47 J 41/02, B 28 B 1/00
B 28 B 11/00

(30) Priority: 21.11.83 JP 219280/83
07.07.84 JP 141095/84
29.09.84 JP 205418/84

(43) Date of publication of application:
12.06.85 Bulletin 85/24

(84) Designated Contracting States:
AT BE CH DE FR GB IT LI LU NL SE

(71) Applicant: YAMAMOTO SEISAKUSHO LTD.
989-3, Iwasa Miyama-cho
Yamagata-gun Gifu-prefecture(JP)

(72) Inventor: Yamamoto, Masashige
c/o YAMAMOTO SEISAKUSHO LIMITED 989-3, Iwasa
Miyama-cho Yamagata-gun Gifu-prefecture(JP)

(74) Representative: Ben-Nathan, Laurence Albert et al,
c/o MICHAEL BURNSIDE & PARTNERS 2 Serjeants' Inn
Fleet Street
London EC4Y 1HL(GB)

(54) Warmth keeping vessel made of ceramics or porcelain and method of producing the same.

(57) A warmth keeping ceramic or porcelaneous vessel wherein a sealed airtight hollow chamber under a reduced pressure is formed between an inner vessel and outer vessel to keep contents warm. The hollow chamber is kept airtight under a reduced pressure by an enamel bonding the joint of the inner vessel and outer vessel or closing fine holes made in either of the inner vessel and outer vessel after the vessels are heated to discharge the air in the hollow chamber through the joint or the fine holes.

FIG.1

0144168

## WARMTH KEEPING VESSEL MADE OF CERAMICS
## OR PORCELAIN AND METHOD OF PRODUCING
## THE SAME

This invention relates to a warmth keeping vessel made of ceramics or porcelain and a method of producing the same.

Vessels made of ceramics or porcelain are utilized mostly, for example, as tableware. In order to serve as tableware, it is not sufficient for them to be vessels for merely containing things. That is to say, the vessels are required to maintain the temperature of foods within them to prolong the tasting time of the foods, in other words, to be able to keep warm things warm for a fixed time and to keep cold things cold for a fixed time.

Now, ceramic or porcelaneous products are so comparatively low in the warmth keeping effect that a conventional method taken to bring a warmth keeping effect is to increase the thickness of a ceramic or porcelaneous vessel itself, to preheat the vessel with hot water or the like or to keep the vessel cool in advance in a refrigerator or the like. However, this has been still insufficient to prolong the above described tasting time. In order to make it sufficient, it is thought to make a ceramic or porcelaneous vessel of a sealed double-walled structure as in a thermos bottle.

However, the ceramic or porcelaneous product is made by heating and firing kaolin above 1000 degrees. Therefore, even if an airtight hollow chamber is formed of double walls by molding kaolin in a vessel mold, when it is simply baked, air within the hollow chamber will expand due to heating and the warmth keeping ceramic or porcelaneous vessel itself will break. Thus, it has been difficult to seal a hollow chamber with heating and firing.

Therefore, there is a method wherein holes through which a hollow chamber formed of double walls communicate with the atmosphere are made in the double walls and then the vessel is fired.

In this method, air between the double walls will be replaced with the atmospheric air through the holes, heat will be exchanged and therefore the warmth keeping effect will be insufficient. In case such vessel is seen as an article, if the joint to make the double walls remains and the holes made in the double walls are conspicuous, the value as of an article will reduce.

The present invention is made in view of such circumstances as are described above and has as an object to provide a double-walled vessel made of ceramics or porcelain and having a warmth keeping effect and a method of producing the same.

A particular object of the present invention is to provide a double-walled vessel wherein air in a hollow space between double walls made of ceramics or porcelain is discharged together with firing and then said space is sealed with an enamel so as to be an adiabatic part to be able to control the conduction of heat as much as possible and a method of producing the same.

A more particular object of the present invention is to provide a ceramic or porcelaneous vessel not only effective to keep warmth but also valuable enough as an article.

The problem to be solved by the present invention is to provide a warmth keeping vessel made of ceramics or porcelain, simple to manufacture, higher in the airtightness of the reduced pressure airtight chamber and adapted to apply a three-dimensional decoration and a method of producing the same.

The above mentioned objects are attained by
the following means and methods:

A warmth keeping vessel made of ceramics
or porcelain characterized in that a ceramic or porcelaneous vessel is made of a structure having a hollow
chamber kept airtight under a reduced pressure;.

A method of producing a warmth keeping
vessel made of ceramics or porcelain characterized
in that an inner vessel and outer vessel forming a
warmth keeping ceramic or porcelaneous vessel of a
double-walled structure are formed of kaolin, are
respectively simply baked, are overlapped on each
other so as to form a hollow chamber, are then painted
with an enamel on the joint of them, are heated at a
temperature rather lower than the melting point of the
enamel to discharge air in the hollow chamber throught
said joint and are further fired at a temperature
higher than the melting point of said enamel so as
to be bonded together to keep the hollow chamber
airtight under a reduced pressure;

A method of producing a warmth keeping
vessel made of ceramics or porcelain characterized
in that an inner vessel and outer vessel forming a

- 5 -

0144168

warmth keeping ceramic or porcelaneous vessel of a double-walled structure are formed of kaolin, are bonded airtightly, have fine holes made in a part of either of them, are simply baked to be well dried, are then painted with an enamel on the surfaces, are heated at a temperature rather lower than the melting point of the enamel to discharge air in the hollow chamber between them through said fine holes, are fired at a temperature higher than the melting point of said enamel, are cooled within a temperature range in which the enamel is kept molten so as to suck said enamel into said hollow chamber through said fine holes due to the pressure difference by the contraction of air in said hollow chamber and solidify the enamel and have said fine holes closed so as to keep the hollow chamber airtight under a reduced pressure;

A warmth keeping vessel made of ceramics or porcelain characterized by having a reduced pressure airtight chamber formed of an inner vessel and outer vessel so as to be perfectly airtight, an enamel coating the inside of this reduced pressure airtight chamber, a plug airtightly secured in a hole communicating with the above mentioned reduced pressure airtight chamber and an enamel solidified to close the clearance between this plug and hole;

A method of producing a warmth keeping vessel made of ceramics or porcelain characterized by

forming a space by putting an inner vessel in a clay state into an outer vessel in a clay state and jointing them with each other in a part,

tightly sealing the above mentioned joint of these inner and outer vessels and making one or more holes in a part of the above mentioned outer vessel,

forming a plug corresponding to this hole, simply baking the above mentioned inner and outer vessels to well dry them,

painting the inside surface of the space formed by the above mentioned inner and outer vessels with an enamel,

inserting and temporarily fixing the above mentioned plug in the hole on the above mentioned outer vessel to form a clearance through which air can come in and go out,

painting the plug on the periphery with an enamel, then heating it at a temperature at which the enamel will melt and discharging the air within the above mentioned space through the above mentioned clearance by utilizing the thermal expansion of the air and then

cooling this vessel within a temperature range in which the enamel will remain molten so that the enamel on the periphery of the above mentioned plug may be sucked into the above mentioned space through the above mentioned clearance by the pressure difference by the contraction of the air within the above mentioned space and then cooling the vessel to solidify the enamel to close the above mentioned clearance.

The drawings show warmth keeping ceramic or porcelaneous vessels embodying the present invention.

Fig. 1 is a vertically sectioned view of a pot embodying the present invention.

Fig. 2 is a partly sectioned perspective· view showing a bottle embodying the present invention.

Fig. 3 is a disassembled sectioned view of the same.

Figs. 4 to 8 are vertically sectioned views for respectively explaining the steps of methods embodying the present invention.

Figs. 9 and 10 are vertically sectioned views showing other embodiments.

Fig. 11 is a magnified sectioned view showing a part as seen along line IX-IX in Fig. 10.

Fig. 12 is a vertically sectioned view show

ing another embodiment.

Fig. 13(A) is a partly sectioned perspective view showing a method of measuring the warmth keeping effect of the same.

Fig. 13(B) is a partly sectioned perspective view showing a method of measuring the warmth keeping effect of a conventional bottle.

Fig. 14 is a graph showing experiment data of water temperature reduction.

Fig. 15 is a vertically sectioned view of a warmth keeping ceramic or porcelaneous vessel according to the present invention.

Figs. 16 to 18 are vertically sectioned views for explaining the method of the present invention.

Fig. 19 is a magnified vertically sectioned view showing a part as seen along line V-V in Fig. 18.

Figs. 20 and 21 are vertically sectioned views corresponding to Fig. 19 and showing other embodiments.

Fig. 22 is a magnified vertically sectioned view of a plug as made to be fitted with a handle.

Fig. 23 is a vertically sectioned view of a warmth keeping ceramic or porcelaneous vessel fitted with a handle.

The present invention is explained in

0144168

detail in the following with reference to the embodiments shown in the drawings.

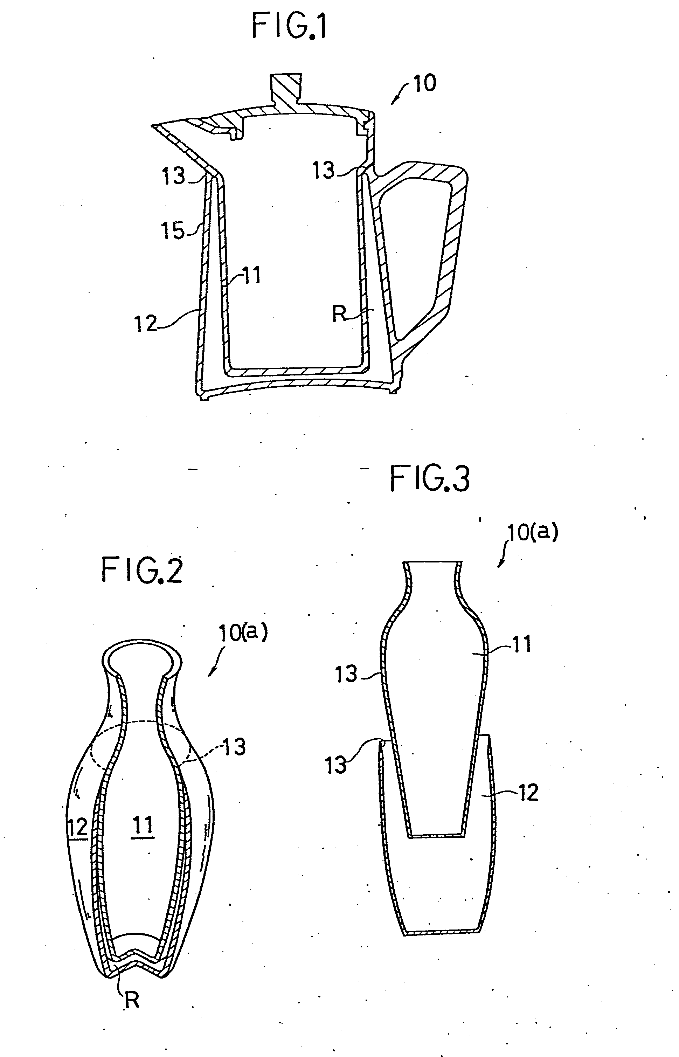

Fig. 1 shows a vertically sectioned view of a pot 10 embodying the present invention. This pot 10 is made of ceramics or porcelain and, needless to say, is painted with an enamel 15 on the surface. Further, this pot 10 is formed by bonding on the joint 13 an inner vessel 11 and outer vessel 12 as separated from each other to form a sealed airtight chamber R under a reduced pressure between the inner vessel 11 and outer vessel 12 so as to be a ceramic or porcelaneous vessel of a double-walled structure having a sealed airtight chamber under a reduced pressure.

The first producing method of the present invention is a method wherein an inner vessel 11 and outer vessel 12 forming a warmth keeping ceramic or porcelaneous vessel of a double-walled structure are formed of kaolin, are respectively simply baked, are overlapped on each other so as to form a hollow chamber, are then painted with an enamel 15 on the joint 13 of them, are heated at a temperature rather lower than the melting point of the enamel 15 to discharge air in the hollow chamber and are further fired at a temperature higher than the melting point of said enamel 15 so as to be bonded together to keep the hollow chamber airtight under a reduced pressure. That is to say, the simply baked inner vessel 11 and outer vessel 12 are overlapped on each other to form a hollow chamber, are heated at a temperature lower than the melting point of the enamel 15 to expand air in the hollow chamber and discharge it through the joint 13 of the inner vessel 11 and outer vessel 12 and are then fired at a temperature higher than the melting point of the enamel 15 to bond the joint 13 with the molten enamel.

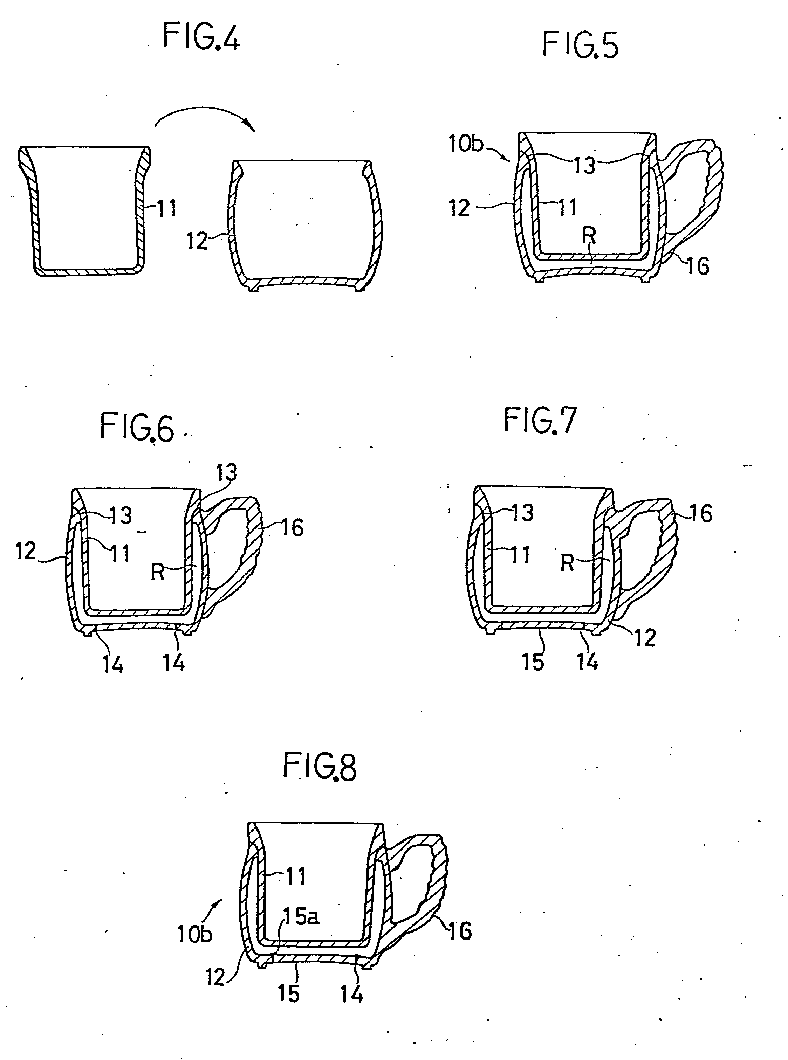

This first producing method shall be explained more in detail with reference to the porcelaneous bottle 10a shown in Figs. 2 and 3. This bottle-shaped vessel 10a is formed of an inner vessel 11 and an outer vessel 12. The inner vessel 11 is substantially bottle-shaped and is of a maximum diameter in the shoulder part. The outer vessel 12 is of the shape of a bottle 10a with the part above the shoulder cut off and has a barrel thicker than the above mentioned inner vessel 11. When this inner vessel 11 is overlapped into the outer vessel 12, the shoulder part of the inner vessel 11 will contact the upper peripheral edge of the outer vessel 12 and the inner vessel 11 will not be able to enter the outer vessel 12 any more. Thus, a hollow chamber is formed of the outer peripheral wall of the inner vessel 11 and the inner peripheral wall of the outer vessel 12. That is to say, the hollow chamber is formed of the outer peripheral wall of the inner vessel 11 and the inner peripheral wall of the outer vessel 12 and the inner vessel 11 and outer vessel 12 contact with each other on the opening edge of this hollow chamber and are sealed. Further, in some case, the inner vessel 11 may exactly fit in the outer vessel 12. Such inner vessel 11 and outer vessel 12 are respectively formed of ordinary kaolin for porcelain and are simply baked by a normal method, are then, as required, printed with pictures and are painted with an enamel 15. This enamel 15 is an ordinary enamel of 50% feldspar, 25% silica, 15% kaolin and 10% talc. By the way, at least the outer peripheral wall of the inner vessel 11 and the inner peripheral wall of the outer vessel 12 in the joint 13 of the inner vessel 11 and outer vessel 12 are to be respectively carefully painted with the enamel 15.

After being painted with the enamel 15, as shown in Fig. 2, the outer vessel 12 and the inner vessel 11 as contained in the outer vessel 12 are fired at a temperature (of about $1000^{o}C.$) rather lower than the melting point (of about $1200^{o}$) of

the enamel 15 for about 2 hours. As they are fired at a temperature (of about 1000°C.) lower than the melting point (of about 1200°C.) of the enamel 15, the enamel 15 will not be melted and the expanded air within the hollow chamber will be discharged through the above mentioned joint 13.

After the air within the hollow chamber is discharged, the inner and outer vessels are further heated and are fired at a temperature (of 1300°C. of an ordinary firing temperature) higher than the melting point of the enamel for 2 hours to be finished. Then, the enamel 15 will melt to bond the joint 13 of the inner vessel 11 and outer vessel 12 and seal the hollow chamber.

That is to say, the hollow chamber is kept airtight under a reduced pressure by the enamel 15 bonding the joint 13 of the inner vessel 11 and outer vessel 12.

By the way, in this embodiment, as the vessel is made of porcelain, the melting point of the enamel 15 is about 1200°C. However, in case the vessel is made of ceramics, the melting point of the enamel 15 will be lower and therefore the firing temperature will be also lower. Further, in the case of the vessel made of ceramics, the vessel itself will be mostly low in

- 13 -

0144168

the airtightness and the inner vessel 11 and outer vessel 12 may be painted all over with the enamel to utilize the airtightness of the enamel 15 to increase the airtightness of the vessel itself.

Now, the second producing method shall be explained in the following with reference, for example, to a coffee cup 10b. First of all, as shown in Fig. 4, an inner vessel 11 and outer vessel 12 are formed of kaolin, the inner vessel 11 in a kaolin stste is put into the outer vessel 12 in a kaolin state and both are jointed airtightly with each other on a joint 13 positioned in the upper end part.

The joint 13 of the thus made inner vessel 11 and outer vessel 12 is smoothed with a sponge or cloth so as to be smooth and one or more fine holes 14 are made in a part of the outer vessel. The joint 13 of the inner vessel 11 and outer vessel 12 is smoothed with a sponge or cloth so as not to be visible in the appearance when the coffee cut 10b is completed as a product. The optimum diameter of the fine hole 14 is about 0.5 mm. according to the experiments made by the Inventors. The number of such fine holes depends on the size of the vessel itself made of ceramics or porcelain but one hole is sufficient for the size of the coffee cup 10b. If the number of the fine holes 14 is increased with the size of the vessel, the pressure within the later described airtight chamber R under a reduced pressure will be able to be well reduced. By the way, such accessory part as a handle 16 is fitted at this time. (See Figs. 5 and 6.)

The coffee cup 10b in this state is simply baked to be well dried. This baking temperature is 700 to 800$^{o}$C. After this simple baking, the coffee cup 10b is painted all over with an enamel 15. (The state in Fig. 7.)

In this case, the neamel is the same ordinary one as in the first producing method. Then this coffee cup 10b is heated for 8 to 9 minutes at such high temperature (of about 500 to 700$^{o}$C.) as will not melt the enamel 15 on the surface to utilize the thermal expansion of the air within the airtight chamber R under a reduced pressure to discharge the air. Further, this coffee cup 10b is heated for 3 to 4 minutes at such temperature (of about 1200 to 1300$^{o}$C.) as will melt the enamel 15. By the way, though the detailed phenomenon is not known, at this time, too, air remaining within the airtight chamber R under a reduced pressure will further expand to be discharged through the respective fine holes 14.

Thereafter, this coffee cup 10b is cooled gradually over at least 7 to 8 minutes so as to suck the enamel 15 molten at the beginning of this cooling into the airtight chamber R under a reduced pressure through the respective fine holes 14 with the pressure difference by the contraction of the air within the airtight chamber R under a reduced pressure. (See Fig. 8.) Thereby, the enamel 15 will close the respective fine holes 14 and a part of the enamel 15 will cover also the outer vessel 12 positioned near the insides of the respective fine holes 14. After the air within the airtight chamber R under a reduced pressure is discharged, the airtight chamber R will be closed and therefore will be literally an airtight chamber under a reduced pressure.

That is to say, the hollow chamber will be kept airtight under a reduced pressure by the enamel 15 filling the respective fine holes 14 communicating with the hollow chamber and flowing into the hollow chamber so as to be solidified.

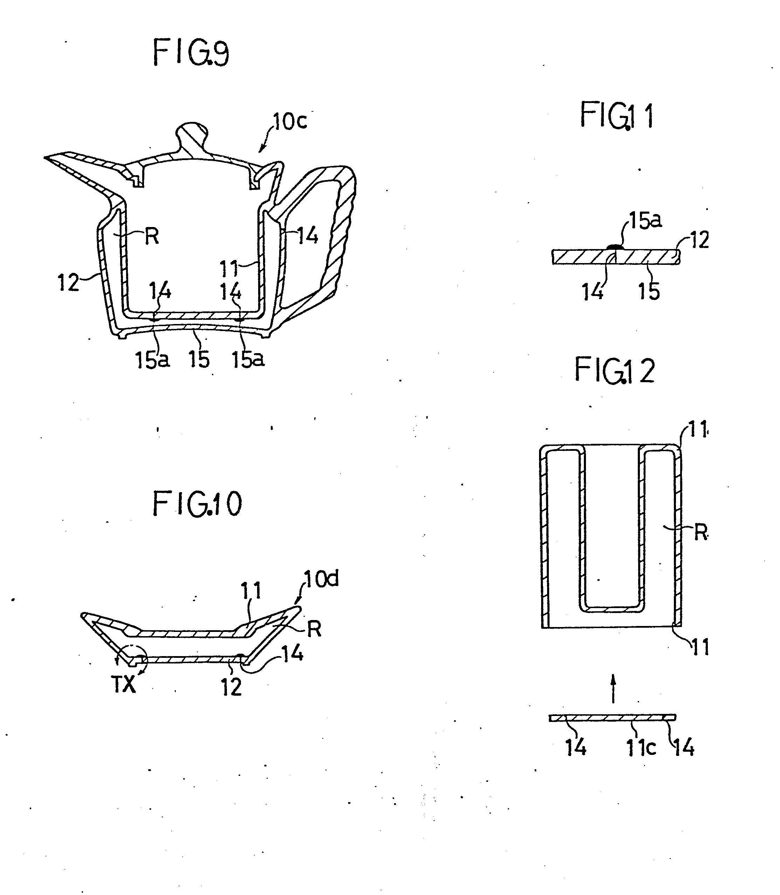

As shown in Figs. 9 and 10, a tea pot 10c or dish 10d is also a ceramic or porcelaneous vessel having such formation as is mentioned above. Further, in the above mentioned embodiment of the second producing method, the respective fine holes 14 as formed in the outer vessel 12 have been explained.  As in the tea pot 10c shown in Fig. 9, the respective fine holes 14 may be formed in the inner vessel 11.  Further, if the respective fine holes 14 are provided not only in the bottom of the vessel as in the above mentioned embodiment but also, for example, in the lower part of a handle 16 of the tea pot 10c shown in Fig. 9, the fine holes 14 will be harder to see.

By the way, the present invention may be embodied not only as in the above mentioned embodiments but also, for example, as shown in Fig. 12. That is to say, an opening 11b may be formed in a vessel 11a in which a space Ra to be an airtight chamber R under a reduced pressure is formed in advance and a lid 11c may be jointed with this opening 11b and may be solidified to form a vessel.

Thus, according to the present invention, by controlling the heating time and heating temperature in the firing step in the conventional process for producing ceramic and porcelaneous products, a hollow chamber provided in a ceramic or porcelaneous product can be easily made airtight under a reduced pressure, the thermal conduction of the contents in the inner vessel 11 is comparatively slow and the preserving effect is remarkably high.  That is to say, in case the temperature of the contents in the vessel is higher than the ambient temperature, the heat will be lost substantially only from the surface of the contents. This fact is very different from the fact that, in the conventional vessel, heat has been discharged and exchanged on all of the surface of the contents and the outer periphery of the vessel. Needless to say, even in case the temperature of the contents in the vessel is lower than the ambient temperature, heat will be exchanged comparatively more slowly then in the conventional vessel.

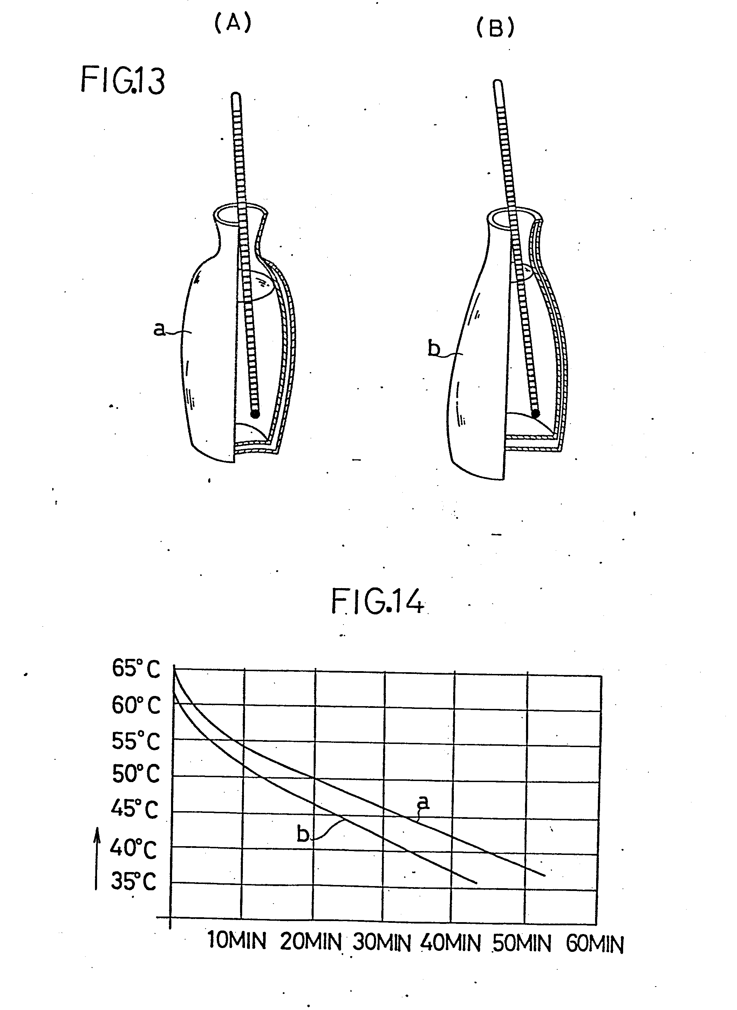

For example, when the temperature variation curve (a) of the bottle 10a made by the second producing method according to the present invention and the temperature variation curve (b) of a bottle having a hollow chamber enclosing normal pressure air and made by a conventional method wherein a hollow chamber formed of double walls is provided with holes communicating with the atmosphere and is fired and then the holes are sealed were investigated as shown in Fig. 13, as a result of pouring respectively 180 cc. of warm water at a room temperature of 20°C. and hot water

temperature of 65°C. and comparing the results, such temperature reduction curves as are shown in Fig. 14 were obtained. Thereby, as the temperature variation curve of the bottle 10a according to the present invention varies slowly, it is apparent that the present invention is effective enough to keep warmth.

Further, in the case by the second producing method, after the enamel 15 is perfectly melted, when the vessels are cooled, this enamel 15 will be sucked into the airtight chamber R under a reduced pressure by the pressure differenc between the airtight chamber R under a reduced pressure and the outside, so to say, automatically to seal the respective fine holes 14 and cover the peripheries of the respective fine holes 14 and, by this suction, the excess enamel 15a will be sucked into the outer vessel 12.

Therefore, if the fine holes 14 are provided in the part in which the enamel 15 is likely to accumulate, the excess enamel 15a will be sucked into the airtight chamber R under a reduced pressure, therefore the parts in which the enamel 15 accumulates on the outer surface of the ceramic or porcelaneous vessel will be able to be eliminated and, when the ceramic or porcelaneous vessel is completed as an article, such fine holes 14 will not appear on the surface and therefore the value as of an article will not be reduced.

Further, if a vessel made of ceramics or

- 19 -

0144168

porcelain is produced by this second method, the respective fine holes 14 may be only formed in advance in the inner vessel 11 or outer vessel 12 and a double-walled vessel high in the warmth keeping effect will be able to be very simply and positively produced.

As detailed in the above, in the ceramic or porcelaneous vessel according to the present invention, heat is exchanged comparatively more slowly than in the conventional vessel, therefore the effect of keeping foods contained in the vessel cool or warm is very high and the time of tasting the foods can be elongated.

Also, the joint and fine holes are treated with the enamel to be beautiful and therefore the vessel is valuable enough as an article. Thus, the present invention is to provide a warmth keeping vessel having both of the advantage of ceramics or porcelain and a warmth keeping property by utilizing the conventional apparatus for producing ceramics and porcelain and is very high in the utility value particularly as of tableware vessels.

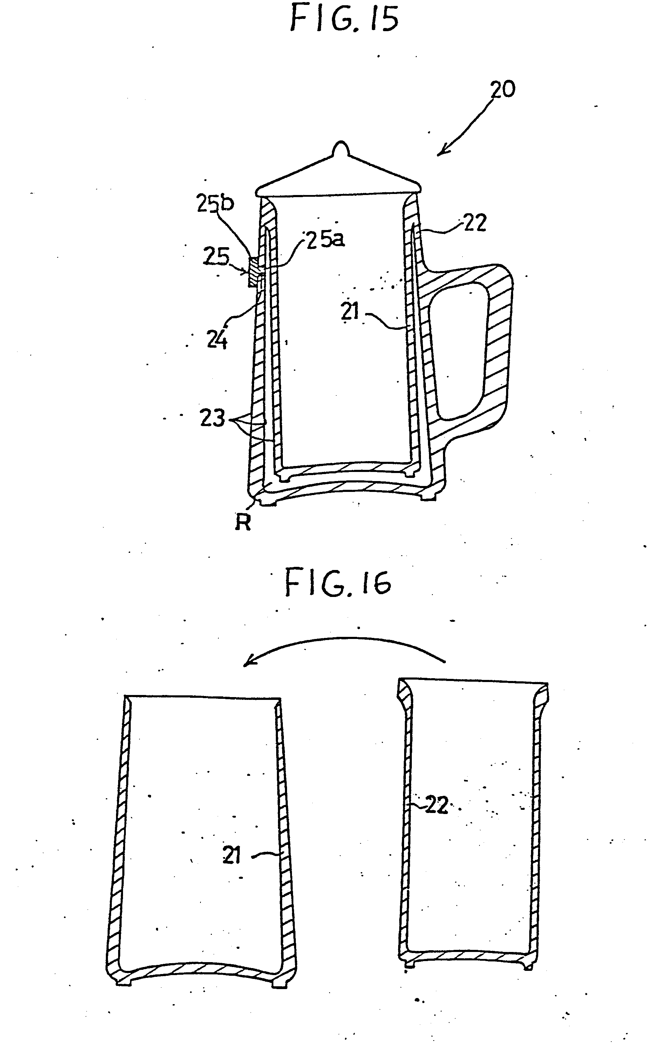

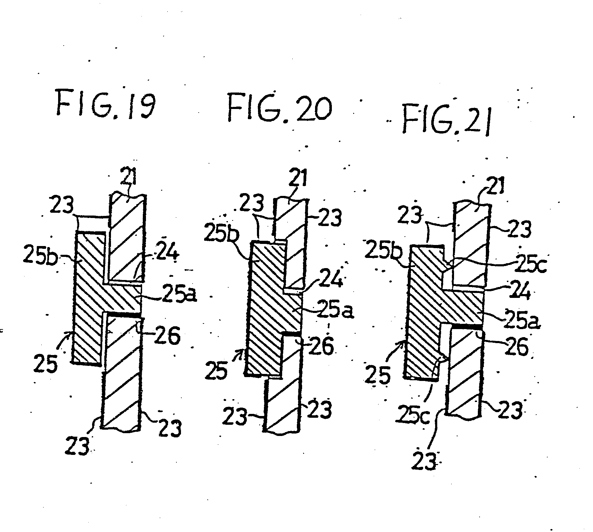

Fig. 15 shows a vertically sectioned view of a warmth keeping ceramic or porcelaneous vessel 20 (which is in fact a beer jar or cup) according to the present invention. In this warmth keeping vessel 20 made of ceramics or porcelain, a reduced pressure airtight chamber R is formed by an outer vessel 21 and inner vessel 22 and not only the outside surface of the warmth keeping ceramic or porcelaneous vessel 20 but also the inside surfaces of both outer vessel 21 and inner vessel 22 are coated with an enamel 23. A hole 24 is formed in a part of the outer vessel forming this warmth keeping ceramic or porcelaneous vessel 20 and an inserted part 25a of a plug 25 is inserted in this hole 24. Not only the surface of this plug 25 is coated with the enamel 23 but also the clearances between this plug 25 and outer vessel 21 and between the inserted part 25a of the plug 25 and hole 24 are impregnated and embedded with the solidified enamel 23. Further, such one-point mark (such decoration as a symbol or trademark) as is shown in Fig. 19 is applied to the surface of the head part 25b of the plug 25.

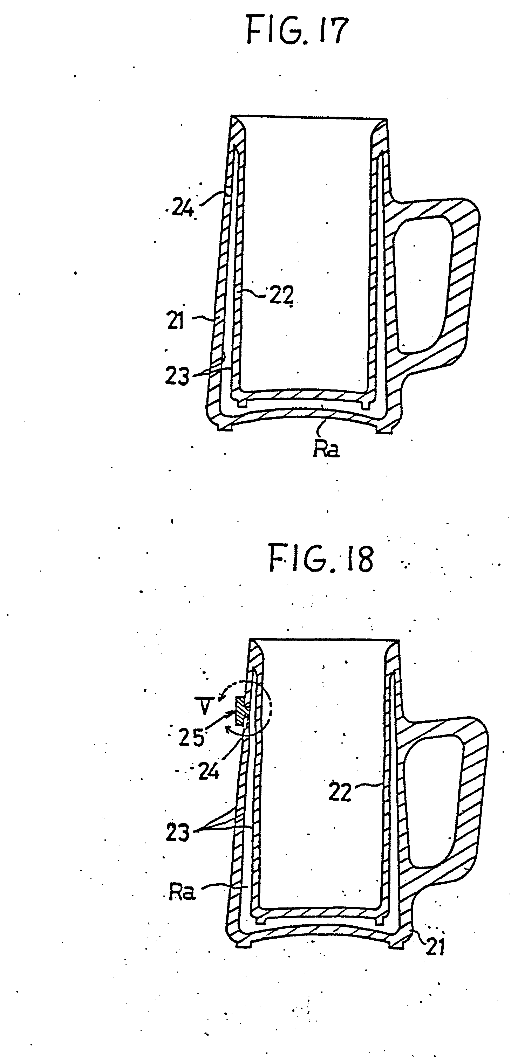

Now, the method of producing the above mentioned warmth keeping ceramic or porcelaneous vessel 20 shall be explained with reference to Figs. 16 to 21. First of all, the outer vessel 21, inner vessel 22 and plug 25 are formed of kaolin, the inner vessel 22 in a clay state is put into the outer vessel 21 also in a clay state and both are jointed with each other in a joint located in the upper end part so as to form an airtight chamber Ra to be one reduced pressure airtight chamber R. One or more holes are made in a proper part of the outer vessel 21 in the clay state. It is proper that the diameter of this hole 24 is about 5 to 15 mm. (See Fig. 17). By the way, if the joint of the outer vessel 21 and inner vessel 22 is made smooth with a sponge or cloth while they are in the clay state, the surface of the completed warmth keeping ceramic or porcelaneous vessel 20 will be finished to be beautiful.

The outer vessel 21, inner vessel 22 and plug 25 in such state are simply baked. The temperature of this baking is different with the kaolin to be used but is about 700 to $800^{\circ}C$. In consideration of the contraction of the kaolin by this baking, the size (diameter) of the inserted part 25a of the plug 25 while in the clay state is so determined as to be able to form such clearance as will allow air to come in and go out between them when the inserted part 25a of the plug 25 is inserted into the hole 24 of the simply baked outer vessel 21 as described later. In fact, if the sizes of both are made the same, the clearance of the above described condition will be able to be well formed by the contraction of both by the simple baking. (See Figs. 19 to 21).

The enamel 23 is poured through the hole 24 into the airtight chamber Ra formed by the simply baked outer vessel 21 and inner vessel 22 to paint the entire inner surfaces of the outer vessel 21 and inner vessel 22 forming the airtight chamber Ra with the enamel 23. At this time, as the hole 24 is comparatively large, even if the hole 24 is one, it will be easy to pour in the enamel and discharge the residue. However, in case a plurality of such holes 24 are provided, such operations will be able to be made more efficiently.

After this enamel 23 is applied, the inserted part 25a of the plug 25 is inserted into the hole 24 of the outer vessel 21 and is fixed with a bonding agent 26. The bonding agent 26 to be used here may be such as will not eliminate the bond between the inserted part 25a and hole 24 at least until the temperature at which the enamel 23 melts. The bonding agent satisfying such condition is considered to be a phenol resin or epoxy resin as a binder reinforced with asbestos, glass fibers, silica fibers or metal fibers. However, simply even a kaolin as dissolved in water will be good enough. However, in applying this bonding agent 26, it should be noted that it is not applied to the entire outer periphery of the inserted part 25a of the plug 25 but is applied partly, because a clearance will be required between the hole 24 and inserted part 25a so that inflated air within the airtight chamber Ra will be able to be discharged out in the case of the later described firing. Concretely, the bonding agent 26 may be applied in the form of about two or three lines in the axial direction of the inserted part 25a. Then, the surfaces of the outer vessel 21, inner vessel 22 and plug 25 are painted with the enamel 23.

By the way, the above operation may be carried out in such manner that the simply baked outer vessel 21 and inner vessel 22 are dipped in the enamel 23 contained in a tank, then the excess enamel within the airtight chamber Ra is discharged through the hole 24 and then the plug 25 painted with the enamel 23 on the head part 25b is fixed in the inserted part 25a to the hole 24.

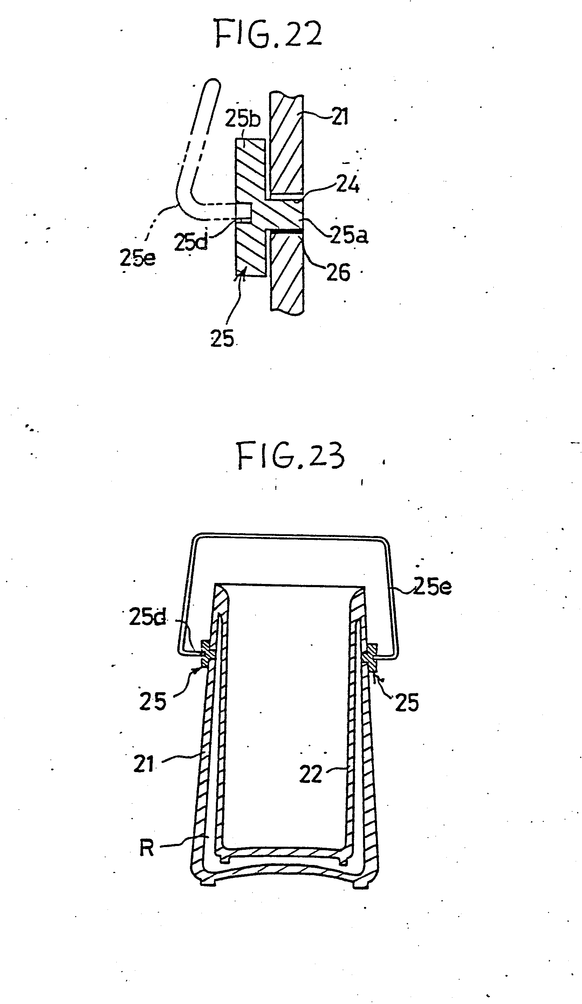

The outer vessel 21, inner vessel 22 and plug 25 thus made integral and painted with the enamel 23 are heated for 8 to 9 minutes at such high temperature (of 500 to 700°C.) that the enamel 23 on the surfaces will not melt and the air within the airtight chamber Ra will be discharged out by the thermal expansion. At this time, in order that the air within the airtight chamber Ra may be positively discharged without being obstructed by the enamel 23, a plurality of such projections as are shown in Fig. 21 may be provided on the inner surface of the head part 25b of the plug 25 so as to positively form a clearance between the head part 25b and outer vessel 21. By the way, in case the warmth keeping ceramic or porcelaneous vessel 20 itself is comparatively small, the surface of the outer vessel 21 will be curved and therefore, even if such projections 25c as are mentioned above are not provided on the head part 25b, there will be a clearance large enough to discharge air. Further, as shown in Fig. 20, the head part 25b of the plug 25 may be partly embedded in a part of the outer vessel 21.

Further, these outer vessel 21, inner vessel 22 and plug 23 are heated or fired for 3 to 4 minutes at such high temperature (of 1200 to 1300°C.) that the enamel 23 will completely melt. By the way, though a precise phenomenon is not clear, even at this time, the air remaining within the airtight chamber Ra will further expand to be discharged through the clearance between the hole 24 and plug 25.

Thereafter, these outer vessel 21, inner vessel 22 and plug 25 are cooled in turn over at least 7 to 8 minutes so that the enamel 23 molten in the initial period of this cooling will be sucked into the airtight chamber Ra through the clearance between the hole 24 and plug 25 by the pressure difference by the contraction of the air within the airtight chamber Ra.

Thereby, the enamel 23 will completely close the clearance between the hole 24 and plug 25 and will solidify. Therefore, the airtight chamber Ra will be closed after most of the air within it is discharged and therefore, in case the warmth keeping ceramic or porcelaneous vessel 20 is placed under the normal temperature, the airtight chamber Ra will be a reduced pressure airtight chamber R literally sealed under a reduced pressure.

The operation of the thus formed warmth keeping ceramic or porcelaneous vessel 20 shall be described in the following. Therein, as the outer vessel 21 and inner vessel 22 are separated from each other by the reduced pressure airtight chamber R, the thermal conduction of the contents within the inner vessel 22 will be comparatively slow. That is to say, in case the temperature of the contents within the inner vessel 22 is higher than the ambient temperature, the heat will be very slowly lost only from the surface of the contents and the joint of the outer vessel 21 and inner vessel 22. Needless to say, in case the temperature of the contents within the inner vessel 22 is lower than the ambient temperature, the outside heat will be comparatively slowly conducted into the inner vessel 22 and the temperature of the contents will rise slowly. Further, in this warmth keeping ceramic or

porcelaneous vessel 20, as not only the outside surfaces but also the inside surfaces of the outer vessel 21 and inner vessel 22 forming the reduced pressure airtight chamber R are coated with the enamel 23, the reduced pressure airtight chamber R will be sealed with this enamel 23 more completely than in the conventional vessel.

Further, in case the above described method is used, the enamel 23 will completely melt and then cool and therefore will be so to say automatically sucked to the reduced pressure airtight chamber R side by the pressure difference between inside and outside the reduced pressure airtight chamber R so as to completely seal the clearance between the hole 24 and plug 25. Further, the plug 25 will be positively secured to the outside surface of the outer vessel by this enamel 23. By the way, the excess enamel 23 will be sucked to the reduced pressure airtight chamber R side by the pressure difference in the reduced pressure airtight chamber R and will enter the clearance between the outer vessel 21 and plug 25 due to the surface tension before it solidifies and therefore will not accumulate on the surface of the outer vessel.

In the embodiment, a proper decoration may be applied to the surface of the head part 25b of the above described plug 25. The decoration may be, for example, a trademark, one-point mark or symbol mark of the manufacturer of this warmth keeping ceramic or porcelaneous vessel 20. Further, if such work as, for example, a hole 25d as shown in Fig. 22 or projection is formed on the head part 25b of this plug 25, it will be able to be made a handle 25e fitting part as shown in Fig. 23.

In the warmth keeping ceramic or porcelaneous vessel 20 according to the present invention formed as in the above, as the reduced pressure airtight chamber R is formed by the outer vessel 21 and inner vessel 22 and both inside and outside surfaces of them are coated with the enamel 23, even if fine cracks have been produced in the outer vessel 21 or inner vessel 22, they will be doubly covered with the enamel 23 and therefore will not impair the airtightness within the reduced pressure airtight chamber. In the present warmth keeping ceramic or porcelaneous vessel, as the plug 25 is used in forming the reduced pressure airtight chamber R, a one-point mark or the like can be utilized as attached to this plug 25 and the value as of a product can be further elivated. Needless to say, if this plug 25 is made a part to fit the handle 25e for carrying the vessel, the handle 25e will be able to be fitted and removed more simply than ever.

Further, according to the method of producing the warmth keeping vessel made of ceramics or porcelain according to the present invention, the reduced pressure airtightness of the reduced pressure airtight chamber can be made more positive and the warmth keeping ceramic or porcelaneous vessels having decorative parts indicating one-point marks or the like three-dimensionally can be produced simultaneously and easily.

Claims

1.      A warmth keeping vessel made of ceramics
or porcelain characterized in that a ceramic or porcelaneous vessel is made of a structure having a hollow
chamber kept airtight under a reduced pressure.

2.      A warmth keeping vessel made of ceramics
or porcelain according to claim 1 characterized in
that said hollow chamber is kept airtight under a
reduced pressure by an enamel bonding the joint of
an inner vessel and outer vessel.

3.      A warmth keeping vessel made of ceramics
or porcelain according to claim 1 characterized in
that said hollow chamber is kept airtight under a
reduced pressure by an enamel filling fine holes
which communicate with the hollow chamber and flowing into the hollow chamber so as to be solidified.

4.      A method of producing a warmth keeping
vessel made of ceramics or porcelain characterized
in that an inner vessel and outer vessel forming a
warmth keeping ceramic or porcelaneous vessel of a
double-walled structure are formed of kaolin, are
respectively simply baked, are overlapped on each
other so as to form a hollow chamber, are then painted
with an enamel on the joint of them, are heated at a
temperature rather lower than the melting point of

0144168

the enamel to discharge air in the hollow chamber through said joint and are further fired at a temperature higher than the melting point of said enamel so as to be bonded together to keep the hollow chamber airtight under a reduced pressure.

5. A method of producing a warmth keeping vessel made of ceramics or porcelain characterized in that an inner vessel and outer vessel forming a warmth keeping ceramic or porcelaneous vessel of a double-walled structure are formed of kaolin, are bonded airtightly, have fine holes made in a part of either or them, are simply baked to be well dried, are then painted with an enamel on the surfaces, are heated at a temperature rather lower than the melting point of the enamel to discharge air in the hollow chamber through said fine holes, are fired at a temperature higher than the melting point of said enamel, are cooled within a temperature range in which the enamel is kept molten so as to suck said enamel into said hollow chamber through said fine holes due to the pressure difference by the contraction of air in said hollow chamber and solidify the enamel and have said fine holes closed so as to keep the hollow chamber airtight under a reduced pressure.

6. A warmth keeping vessel made of ceramics or porcelain characterized by having a reduced pressure airtight chamber formed of an inner vessel and outer vessel so as to be perfectly airtight, an enamel coating the inside of this reduced pressure airtight chamber, a plug airtightly secured in a hole communicating with the above mentioned reduced pressure airtight chamber and an enamel solidified to close the clearance between this plug and hole.

7.    A method of producing a warmth keeping vessel made of ceramics or porcelain characterized by

forming a space by putting an inner vessel in a clay state into an outer vessel in a clay state and jointing them with each other in a part,

tightly sealing the above mentioned joint of these inner and outer vessels and making one or more holes in a part of the above mentioned outer vessel,

forming a plug corresponding to this hole, simply baking the above mentioned inner and outer vessels to well dry them,

painting the inside surface of the space formed by the above mentioned inner and outer vessels with an enamel,

inserting and temporarily fixing the above mentioned plug in the hole on the above mentioned outer vessel to form a clearance through which air can come in and go out,

painting the plug on the periphery with an enamel, then heating it at a temperature at which the enamel melts and discharging the air within the above mentioned space through the above mentioned clearance by utilizing the thermal expansion of the air and then

cooling this vessel within a temperature range in which the enamel will remain molten so that the enamel on the periphery of the above mentioned plug may be sucked into the above mentioned space through the above mentioned clearance by the pressure difference by the contraction of the air within the above mentioned space and then cooling the vessel to solidify the enamel to close the hole made to close the above mentioned clearance.

0144168

## FIG.1

13   13
15
11
12
R
10

## FIG.3

10(a)
13   11
13
12

## FIG.2

10(a)
13
12   11
R

0144168

FIG.4

FIG.5

FIG.6

FIG.7

FIG.8

FIG.9

FIG.11

FIG.10

FIG.12

0144168

(A)  (B)

FIG.13

FIG.14

FIG. 15

FIG. 16

## FIG. 17

## FIG. 18

FIG.19  FIG.20  FIG.21

0144168

## FIG.22

## FIG.23